(19) Europäisches Patentamt / European Patent Office / Office européen des brevets

(11) **EP 2 313 647 B1**

(12) **FASCICULE DE BREVET EUROPEEN**

(45) Date de publication et mention
de la délivrance du brevet:
**08.08.2012 Bulletin 2012/32**

(21) Numéro de dépôt: **09757541.9**

(22) Date de dépôt: **03.06.2009**

(51) Int Cl.:
**F03B 13/20** (2006.01)   **F03B 15/00** (2006.01)

(86) Numéro de dépôt international:
**PCT/EP2009/056775**

(87) Numéro de publication internationale:
**WO 2009/147160 (10.12.2009 Gazette 2009/50)**

(54) **DISPOSITIF POUR CONVERTIR UNE ÉNERGIE DE HOULE EN ÉNERGIE UTILISABLE NOTAMMENT ÉLECTRIQUE ET PROCÉDÉ ASSOCIÉ**

VORRICHTUNG ZUR UMWANDLUNG VON WELLENENERGIE IN NUTZBARE ENERGIE, INSBESONDERE ELEKTRISCHE ENERGIE, UND ZUGEORDNETES VERFAHREN

DEVICE FOR CONVERTING WAVE ENERGY INTO USEABLE ENERGY, PARTICULARLY ELECTRICAL ENERGY, AND ASSOCIATED METHOD

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **04.06.2008 FR 0853695**

(43) Date de publication de la demande:
**27.04.2011 Bulletin 2011/17**

(73) Titulaires:
• **ECOLE CENTRALE DE NANTES**
  **44000 Nantes (FR)**
• **Centre National de la Recherche Scientifique (C.N.R.S)**
  **75016 Paris (FR)**

(72) Inventeurs:
• **BABARIT, Aurélien**
  **F-44000 Nantes (FR)**
• **GUGLIELMI, Michel**
  **F-44300 Nantes (FR)**
• **CLEMENT, Alain**
  **F-44300 Nantes (FR)**

(74) Mandataire: **Texier, Christian et al**
  **Cabinet Regimbeau**
  **20, rue de Chazelles**
  **75847 Paris Cedex 17 (FR)**

(56) Documents cités:
WO-A-2005/045243   WO-A-2007/137426
FR-A- 2 384 961   FR-A- 2 876 751

**Description**

DOMAINE DE L'INVENTION

L'invention concerne un dispositif pour convertir l'énergie des vagues et de la houle en énergie utilisable notamment électrique.

ETAT DE LA TECHNIQUE

Les dispositifs pour convertir l'énergie des vagues et de la houle en énergie électrique, dits dispositifs « houlomoteurs » permettent de produire de l'électricité à partir d'une source d'énergie renouvelable (l'énergie potentielle et cinétique des vagues) sans émission de gaz à effet de serre.

Certains de ces dispositifs comprennent un ou plusieurs éléments oscillants mis en mouvement par l'action des vagues et des moyens permettant de convertir le mouvement des éléments oscillants en courant électrique. Des stratégies de commande agissant sur le mouvement des éléments oscillants ont été développées pour optimiser le rendement de ces dispositifs.

Le document FR 2 876 751 A1 décrit un appareil pour convertir l'énergie des vagues en énergie électrique. L'appareil comprend un élément flotteur fermé et un élément formant masse disposé à l'intérieur de l'élément flotteur. L'élément formant masse est une roue pendulaire montée mobile autour d'un axe horizontal par rapport à l'élément flotteur. La roue est mise en mouvement par l'action des vagues qui fait osciller l'élément flotteur. L'appareil comprend également des moyens de blocage pour sélectivement bloquer ou libérer l'élément formant masse et des moyens de commande pour commander les moyens de blocage de manière à amplifier le mouvement de l'élément formant masse par adaptation continuelle de la dynamique de l'appareil aux vagues successives.

Les moyens de blocage permettent de faire passer l'élément formant masse successivement d'un état bloqué par rapport au flotteur à un état libre. Une commande appropriée des moyens de blocage permet d'augmenter le rendement énergétique de l'appareil. La performance de ce type de commande à deux états (commande par bloqué-lâché) repose sur la détermination de l'instant de commutation d'un état à l'autre. Un choix judicieux de cet instant de commutation permet de générer puis d'entretenir une résonance du système mécanique masse-flotteur à des fréquences autres que la ou les fréquence(s) propre(s) naturelle(s) du système.

La commande par bloqué-lâché a pour effet d'abaisser la fréquence propre du système, autrement dit d'allonger la période propre du système mécanique. Ce type de commande est donc particulièrement efficace lorsque la fréquence de la houle est inférieure à la fréquence propre naturelle du système, autrement dit lorsque la période de la houle est supérieure à la période propre naturelle du système.

Cependant, les sollicitations des vagues étant par nature aléatoires en période, amplitude, direction, ..., il est nécessaire d'adapter en temps réel, vague après vague, le système mécanique masse-flotteur à la dynamique des sollicitations pour entretenir un état résonant.

Le document A. Babarit, A. H. Clément, «Optimal latching control of a wave energy device in regular and irregular waves », 2006, Applied Ocean Research Vol. 28, pp. 77-91, décrit par exemple deux procédés de commande pour un tel contrôle par bloqué-lâché (« latching »). Le premier procédé est basé sur la solution analytique de l'équation de mouvement d'un dispositif houlomoteur (WEC) soumis à une houle régulière, en utilisant des exponentielles de matrice. Ce premier procédé peut être utilisé pour calculer une durée de blocage optimale. Le deuxième procédé est dérivé de la théorie de la commande optimale. Ce deuxième procédé est basé sur une formulation d'un hamiltonien et le principe du maximum de Pontryagin. Une modélisation simple est utilisée pour décrire la commande par bloqué-lâché avant d'appliquer la théorie de la commande optimale.

Le document FR 2 384 961 A quant à lui décrit un appareil pour convertir l'énergie de la houle du type comprenant un corps flottant déplacé sous l'action de l'eau qui est adapté pour être au moins partiellement immergé et qui est relié mécaniquement à un point d'ancrage fixe du fond marin. Les moyens de liaison entre l'élément et le point d'ancrage comprennent un mécanisme de retenue ou de blocage adapté pour maintenir l'élément à peu près stationnaire par rapport au point d'ancrage pendant des périodes de temps déterminées sélectivement de chaque cycle de la houle à laquelle l'appareil est soumis.

Enfin, le document WO 2007/137426 A1 décrit un dispositif de conversion de l'énergie des vagues, comprenant un premier corps interconnecté à un second corps de telle sorte que les corps puissent osciller longitudinalement l'un par rapport à l'autre. Une masse (ayant une masse effective, une dureté et des propriétés d'amortissement données) est connectée visco-élastiquement au premier corps et un générateur (ayant des propriétés d'amortissement de charge) est connecté entre les deux corps. Le convertisseur est contrôlable de manière dynamique pour permettre le mouvement longitudinal des corps en fonction du mouvement des vagues, de façon à maintenir une oscillation déphasée des corps et accroître la force d'entrainement du générateur et donc l'énergie électrique produite par le générateur.

RESUME DE L'INVENTION

Un but de l'invention est d'augmenter encore le rendement énergétique d'un dispositif houlomoteur à élément(s) oscillant(s).

Ce problème est résolu dans le cadre de la présente invention grâce à un dispositif pour convertir une énergie de houle en énergie électrique ayant les caractéristiques techniques de la revendication 1, comprenant un élément flotteur, un élément oscillant monté mobile par rapport à l'élément flotteur, l'élément oscillant étant apte à être mis en mouvement relatif par rapport à l'élément flotteur sous une action de la houle sur l'élément flotteur et des moyens de conversion du mouvement de l'élément oscillant en énergie utilisable, notamment électrique, le dispositif comprenant également des moyens de freinage aptes à sélectivement bloquer ou libérer l'élément oscillant par rapport à l'élément flotteur, des moyens d'embrayage aptes à sélectivement accoupler ou désaccoupler les moyens de conversion et l'élément oscillant, et des moyens de contrôle pour piloter les moyens de freinage et les moyens d'embrayage en fonction d'une évolution de la houle.

Grâce aux moyens de freinage et d'embrayage, le dispositif peut être piloté selon trois états :

- un premier état embrayé, dans lequel l'élément oscillant entraine les moyens de conversion et produit de l'énergie utilisable, notamment électrique,
- un deuxième état bloqué, dans lequel dans lequel l'élément oscillant est immobilisé par rapport à l'élément flotteur, immobilisant également le système de conversion qui ne produit plus alors d'énergie,
- un troisième état débrayé, dans lequel l'élément oscillant non bloqué est libre en mouvement par rapport à l'élément flotteur et n'entraine pas les moyens de conversion qui ne produisent plus alors d'énergie.

Le troisième état permet d'obtenir une accélération de l'élément oscillant plus importante que lorsque l'élément oscillant entraine les moyens de conversion. Lors de cette accélération, l'élément oscillant emmagasine donc de l'énergie mécanique (cinétique et potentielle) qu'il pourra restituer lors d'une oscillation ultérieure, lorsque l'élément oscillant sera à nouveau accouplé aux moyens de conversion.

Par un pilotage approprié des moyens de freinage et les moyens d'embrayage, le dispositif permet d'améliorer sensiblement le rendement énergétique de la conversion.

Le dispositif peut en outre présenter les caractéristiques suivantes :

- les moyens de contrôle sont aptes à recevoir en entrée des signaux en provenance de capteurs mesurant une amplitude de la houle en amont du dispositif et à générer en sortie des signaux de commande pour commander les moyens de freinage et les moyens d'embrayage,
- les moyens de commande des moyens de contrôle sont programmés pour exécuter des étapes de :

  • évaluer les états du dispositif en fonction de l'évolution de la houle à partir d'une modélisation du dispositif,
  • calculer un paramètre de critère d'optimisation de la commande en fonction des états du dispositif,
  • élaborer les signaux de commande des moyens de freinage et des moyens d'embrayage, de manière à maximiser le paramètre de critère,

- les moyens de commande réitèrent les étapes qui précèdent pour obtenir une convergence des signaux de commande calculés.

L'invention se rapporte également à un procédé pour convertir une énergie de houle en énergie utilisable notamment électrique, dans lequel un dispositif tel que défini précédemment est soumis à une action de la houle et les moyens de contrôle pilotent les moyens de freinage et les moyens d'embrayage en fonction d'une évolution de la houle et des vagues.

PRESENTATION DES FIGURES

- la figure 1 représente de manière schématique, en perspective, la vue extérieure d'un dispositif pour convertir une énergie de houle en énergie électrique, conforme à un mode de réalisation de l'invention,
- la figure 2 représente de manière schématique un dispositif pour convertir une énergie de houle en énergie électrique dans un premier état dit « embrayé »,
- la figure 3 représente de manière schématique le dispositif dans un deuxième état dit « bloqué »,
- la figure 4 représente de manière schématique le dispositif dans un troisième état dit « débrayé »,

- la figure 5 est un diagramme représentant de manière schématique des étapes d'un procédé de commande du dispositif conforme à un mode de réalisation de l'invention,
- la figure 6 est un diagramme représentant de manière schématique la puissance électrique générée par le dispositif en fonction de la période de la houle, pour un dispositif sans commande, pour un dispositif piloté avec une commande à trois états, pour un dispositif piloté avec une commande à deux états,
- la figure 7 est un diagramme représentant de manière schématique un exemple d'évolution du mouvement relatif de l'élément oscillant par rapport à l'élément flotteur, le signal de commande de blocage, le signal de commande de débrayage et l'énergie électrique produite par le dispositif en fonction du temps.

## DESCRIPTION DETAILLEE D'UN MODE DE REALISATION

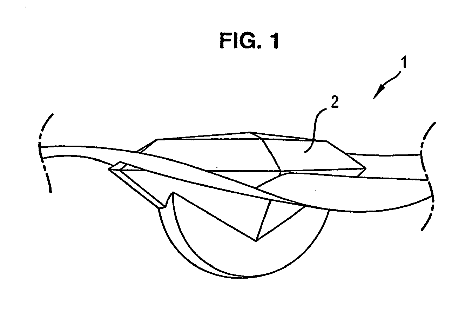

Sur les figures 1 à 4, le dispositif 1 représenté comprend un élément flotteur 2 sous la forme d'un boitier étanche clos, un élément oscillant 3 disposé à l'intérieur du boîtier et monté rotatif par rapport à celui-ci, ainsi que des moyens 4 de conversion du mouvement de l'élément oscillant en énergie électrique.

L'élément flotteur 2 est destiné à être immergé dans l'eau.

L'élément oscillant 3 est une roue pendulaire, montée rotative autour d'un axe horizontal par rapport à l'élément flotteur 2. La roue pendulaire présente une forme générale cylindrique. La roue pendulaire peut tourner sur elle-même par rapport à l'élément flotteur autour d'un axe de rotation X qui est confondu avec l'axe propre du cylindre. De plus, la roue pendulaire présente un centre de gravité R excentré par rapport à l'axe de rotation X.

L'élément flotteur 2 présente une forme telle que le dispositif s'oriente naturellement avec un axe longitudinal dans la direction principale de propagation des vagues. Cette caractéristique a pour effet que l'axe de rotation X de l'élément oscillant 3 est toujours orienté perpendiculairement à la direction principale de propagation des vagues afin d'obtenir une sollicitation maximale de l'élément oscillant.

Dans un tel dispositif, la rotation de l'élément oscillant 3 ne se trouve limitée ni par l'espace intérieur de l'élément flotteur 2, ni par les moyens 4 de conversion. Ainsi, ce dispositif 1 ne nécessite pas de moyens spécifiques de fin de course. En cas de forte houle, l'élément oscillant 3 peut effectuer librement un tour complet sur lui-même sans endommager la structure du dispositif ni aucun composant interne.

Les moyens 4 de conversion comprennent un convertisseur hydraulique / électrique qui est apte à être entrainé par le mouvement de l'élément oscillant 3. Le convertisseur convertit le mouvement de l'élément oscillant en énergie électrique. L'énergie électrique produite peut être stockée sur place ou transportée vers un site distant par un câble électrique souple.

Le dispositif 1 comprend en outre des moyens de freinage 5 aptes à sélectivement bloquer ou libérer l'élément oscillant 3 par rapport à l'élément flotteur 2. Les moyens de freinage 5 comprennent une paire de freins à disques 6 aptes à être mis en contact avec l'élément oscillant 3 pour l'immobiliser par rapport à l'élément flotteur 2.

Le dispositif 1 comprend également des moyens 7 d'embrayage aptes à sélectivement accoupler ou désaccoupler les moyens 4 de conversion et l'élément oscillant 3. Lorsque les moyens 4 de conversion sont accouplés avec l'élément oscillant 3, l'élément oscillant 3 entraine les moyens 4 de conversion. Lorsque les moyens 4 de conversion sont désaccouplés de l'élément oscillant 3, le mouvement de l'élément oscillant 3 n'est plus transmis aux moyens 4 de conversion.

Le dispositif comprend enfin des moyens 8 de contrôle embarqués pour piloter les moyens 5 de freinage et les moyens 7 d'embrayage en fonction d'une évolution de la houle. Les moyens 8 de contrôle embarqués comprennent un calculateur programmé pour exécuter un algorithme de commande des moyens 5 de freinage et des moyens 7 d'embrayage.

La calculateur reçoit en entrée des signaux en provenance de capteurs mesurant notamment les mouvements de l'élément flotteur 2 et de l'élément oscillant 3, de l'amplitude des vagues en fonction du temps et génère en sortie des signaux de commande vers les moyens 5 de freinage et les moyens 7 d'embrayage.

L'amplitude des vagues peut être mesurée au moyen de capteurs agencés dans une bouée de mesure disposée en amont du dispositif 1 par rapport à la direction de mouvement de la houle. Ainsi, l'évolution des vagues est mesurée par les capteurs en avance par rapport au moment de leur action effective sur l'élément flotteur 2.

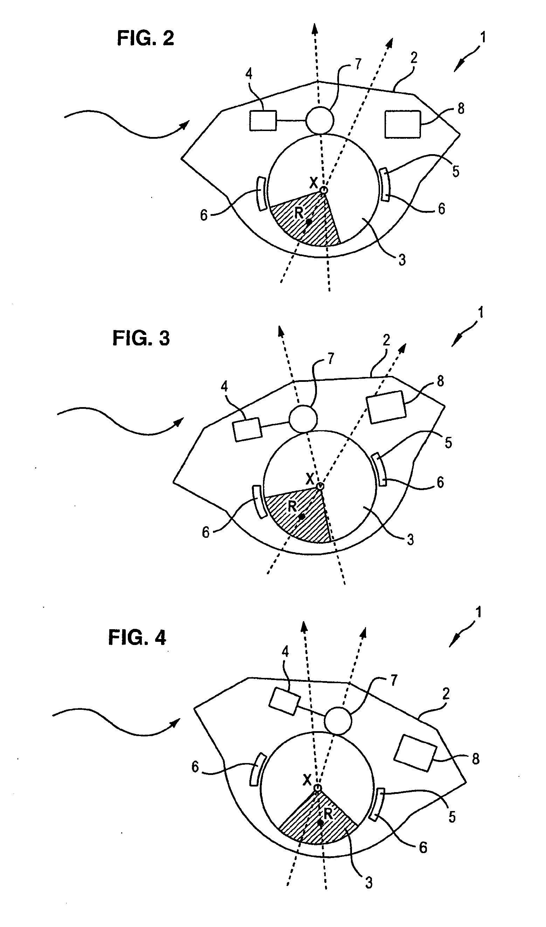

Sur la figure 2, le dispositif 1 est représenté dans un premier état dit « embrayé », dans lequel le dispositif produit de l'énergie électrique. Dans cet état, les moyens 4 de conversion sont accouplés à l'élément oscillant et les moyens de freinage ne sont pas activés. L'élément oscillant est mis en mouvement par rapport à l'élément flotteur sous l'action de la houle sur l'élément flotteur et les moyens de conversion convertissent le mouvement de l'élément oscillant en énergie électrique.

Sur la figure 3, le dispositif 1 est représenté dans un deuxième état dit « bloqué », dans lequel les moyens de freinage sont activés. Dans cet état, les freins à disques sont en contact avec l'élément oscillant et empêchent tout mouvement de l'élément oscillant par rapport à l'élément flotteur. La mise en contact des freins à disque avec l'élément oscillant est généralement commandée lorsque la vitesse relative de l'élément oscillant par rapport à l'élément flotteur est nulle, ce qui minimise l'énergie requise pour le freinage.

Sur la figure 4, le dispositif 1 est représenté dans un troisième état dit « débrayé », dans lequel les moyens 4 de conversion sont désaccouplés de l'élément oscillant et les moyens de freinage ne sont pas activés. Dans cet état, l'élément oscillant est libre de se mouvoir par rapport à l'élément flotteur sous l'action des vagues, mais le dispositif 1 ne produit pas d'énergie électrique. Du fait que l'élément oscillant est libre, il peut accélérer plus vite que lorsque le dispositif est dans l'état embrayé, ce qui lui permet d'emmagasiner de l'énergie mécanique (cinétique et potentielle) qu'il pourra restituer ultérieurement lorsque les moyens de conversion seront à nouveau accouplés à l'élément oscillant.

Les moyens 8 de contrôle embarqués commandent en temps réel les moyens de freinage et les moyens d'embrayage pour faire passer le dispositif séquentiellement dans les trois états « embrayé », « débrayé », « bloqué » qui viennent d'être définis, en fonction de l'évolution de la houle.

Modélisation du système

Le système peut être modélisé de la manière suivante :

$$\dot{X} = f(t, X, u)$$

Où:

$X$ est le vecteur d'état du système,
$t$ est le temps,
$u$ est la commande.

La commande $u$ se décompose en une commande de freinage ($U_{latching}$) et une commande d'embrayage ($u_{embrayage}$) qui peuvent prendre les valeurs suivantes :

$U_{latching}$ = 0 commande le déblocage de l'élément oscillant,
$U_{latching}$ =1 commande le blocage de l'élément oscillant,
$u_{débrayage}$ = 0 commande le désaccouplement des moyens de conversion,
$u_{débrayage}$ =1 commande l'accouplement des moyens de conversion.

Le dispositif est donc piloté selon trois états :

| | | Signal de commande des moyens de freinage | |
|---|---|---|---|
| | | $u_{latching}$ = 0 | $u_{latching}$ = 1 |
| Signal de commande de moyens d'embrayage | $u_{débrayage}$ = 0 | Etat 3 Débrayé (figure 4) | Etat 2 Bloqué (figure 3) |
| | $u_{débrayage}$ = 1 | Etat 1 Embrayé (figure 2) | |

Commande par maximisation de l'énergie absorbée

Une stratégie de commande par maximisation de l'énergie absorbée a été décrite par R. E. Hoskin et N. K. Nichols, Utilization of Ocean waves: Wave to Energy Conversion, « Optimal strategies for phase control of wave energy devices », American society of civil engineers, 1986, p.184-199.

L'énergie électrique maximale générée par le système est définie comme :

$$\max(E) = \int_{t}^{t+\Delta t} F_{conversion} \cdot u \cdot dt$$

On définit un opérateur hamiltonien comme :

$$H = P + \lambda^t \cdot F$$

Où :

$\lambda^t$ sont les états adjoints du système.

$$\dot{\lambda} = \frac{\partial H}{\partial X}$$

$$H = g(X,t) + c \cdot \lambda_j \cdot \dot{\alpha} \cdot u_{latching} + d \cdot \dot{\alpha} \cdot (\Lambda - \dot{\alpha}) \cdot u_{débrayage}$$

Où:

$\dot{\alpha}$ est la vitesse angulaire relative de l'élément oscillant par rapport à l'élément flotteur.

La commande est considérée comme optimale lorsque l'opérateur hamiltonien est maximal.

Algorithme de calcul de la commande

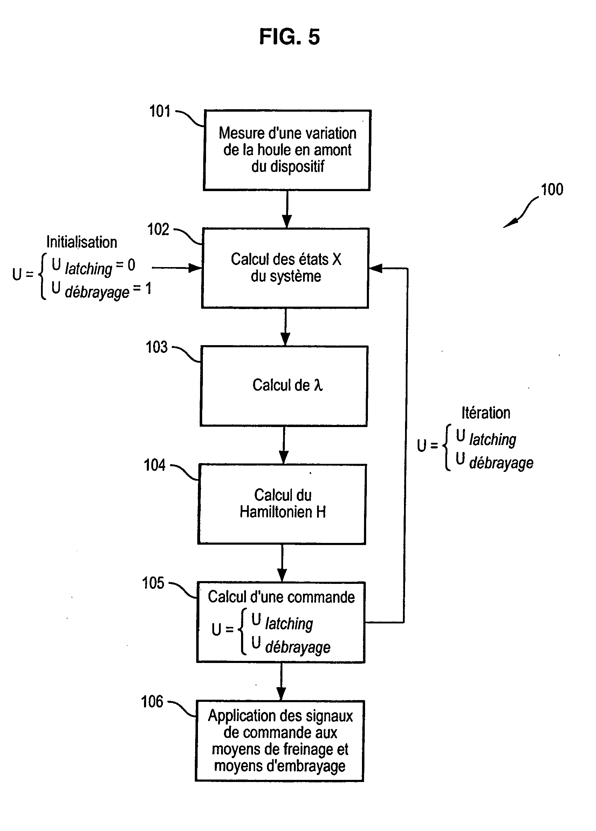

La figure 5 représente des étapes d'un procédé 100 de commande du dispositif. Le procédé de commande est mis en oeuvre par le calculateur. Le calculateur est programmé pour exécuter les étapes suivantes :

Selon une première étape 101, le calculateur mesure une évolution de la houle en amont du dispositif sur une période de temps $\Delta t$ prédéterminée.

Selon une deuxième étape 102, le calculateur calcule une variation des états $X$ du système sur la période de temps $\Delta t$. La variation des états $X$ est calculé en fonction de l'évolution mesurée de la houle et de la commande $u$.

Initialement, la commande $u$ est fixée aux valeurs suivantes :

$$u_{initiale} = \begin{cases} u_{latching} = 0 \\ u_{débrayage} = 1 \end{cases}$$

Autrement dit, les signaux de commande des moyens de freinage et des moyens d'embrayage sont considérés comme constants, le système se trouvant dans un état embrayé.

Selon une troisième étape 103, le calculateur calcule une variation de la variation des états adjoints du système $\lambda$ en fonction des états $X$ déterminés à l'étape précédente.

Selon une quatrième étape 104, le calculateur calcule une variation du hamiltonien $H$ en fonction des états adjoints $\lambda$, déterminés à l'étape précédente.

Selon une cinquième étape 105, le calculateur calcule une variation de la commande $u = \begin{cases} u_{latching} \\ u_{débrayage} \end{cases}$

par maximisation du hamiltonien.

Puis les étapes 102 à 105 sont réitérées sur la base de la commande $u$ ainsi déterminée.

Les étapes 102 à 105 sont renouvelées jusqu'à ce que les signaux de commande $u_{latching}$ et $u_{débrayage}$ convergent.

Selon une sixième étape 106, le calculateur applique les signaux de commande ainsi déterminés respectivement aux moyens de freinage et aux moyens d'embrayage.

Résultats

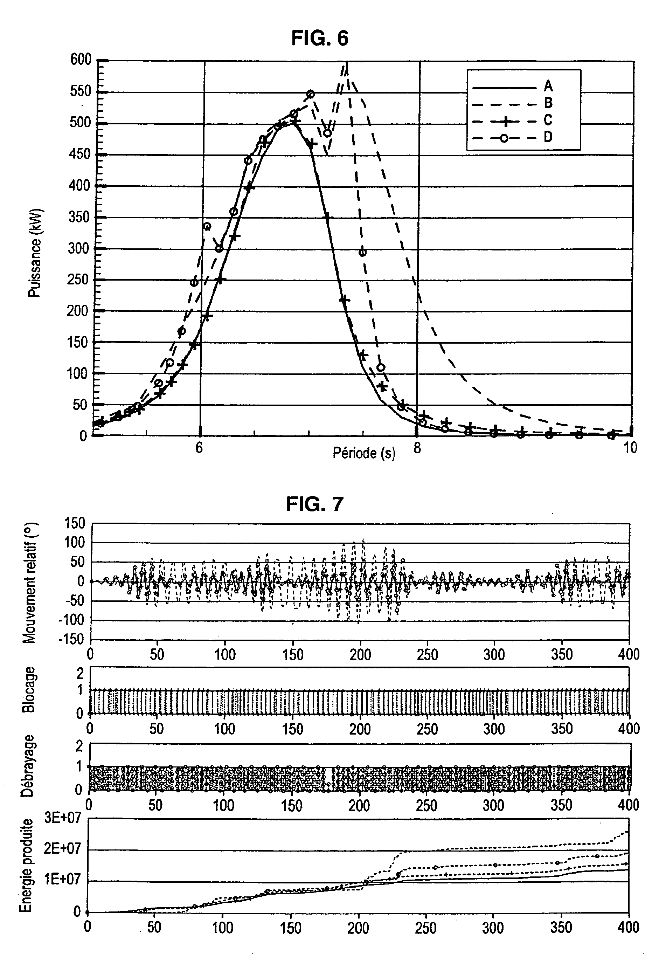

La figure 6 est un diagramme représentant de manière schématique la puissance électrique générée par le dispositif en fonction de la période de la houle, pour un exemple de dispositif.

La houle considérée est régulière et présente une amplitude de 1 mètre.

Trois modes de pilotage sont représentées :

- un mode de pilotage sans contrôle (courbe A),
- un mode de pilotage avec un contrôle à trois états conforme à l'invention (courbe B),
- un mode de pilotage avec un contrôle à deux états bloqué-laché (courbe C), et
- un mode de pilotage avec un contrôle à deux états embrayé-débrayé (courbe D).

Il apparaît que dans cet exemple, le mode de pilotage à trois états (courbe B) offre les meilleures performances, en élargissant considérablement la bande passante du système.

En outre, le gain obtenu avec le mode de pilotage à trois états (courbe B) est largement supérieur à la somme des gains obtenus respectivement avec le mode de pilotage par commande des moyens de freinage seul (courbe) et avec le mode de pilotage par commande des moyens d'embrayage seul (courbe D).

La figure 7 illustre les performances de chaque mode de pilotage en houle aléatoire. Cette figure représente :

- l'historique du mouvement relatif de l'élément oscillant par rapport à l'élément flotteur (position $\alpha$ en fonction du temps),
- le signal de commande de blocage ($u_{latching}$) et/ou le signal de commande de débrayage ($u_{débrayage}$), et
- l'énergie produite par le dispositif.

Il apparait que le mode de pilotage avec un contrôle à trois états apporte dans cet exemple un gain significatif sur la production d'énergie du dispositif, par rapport au mode de pilotage sans commande (gain de +85%), par rapport au mode de pilotage avec une commande à deux états bloqué-laché (gain de +71%) et par rapport au mode de pilotage avec une commande à deux états embrayé-débrayé (gain de +37%).

Par exemple, lorsque le pilotage avec une commande à trois états est appliqué à des variations de houle issues de mesures en mer, à proximité de l'Ile d'Yeu (Vendée, France), ce mode de pilotage permet d'améliorer la production annuelle d'énergie électrique d'environ +70%.

## Revendications

1. Dispositif (1) pour convertir une énergie de houle en énergie utilisable notamment électrique, comprenant un élément flotteur (2), un élément oscillant (3) monté mobile par rapport à l'élément flotteur, l'élément oscillant (3) étant apte à être mis en mouvement relatif par rapport à l'élément flotteur (2) sous une action de la houle sur l'élément flotteur et des moyens (4) de conversion du mouvement de l'élément oscillant (3) en énergie utilisable notamment électrique, le dispositif (1) comprenant également des moyens (5) de freinage aptes à sélectivement bloquer ou libérer l'élément oscillant (3) par rapport à l'élément flotteur, **caractérisé en ce qu'**il comporte en outre des moyens (7) d'embrayage aptes à sélectivement accoupler ou désaccoupler les moyens (4) de conversion et l'élément oscillant (3), et des moyens (8) de contrôle pour piloter les moyens de (5) freinage et les moyens (7) d'embrayage en fonction d'une évolution de la houle.

2. Dispositif selon la revendication 1, dans lequel les moyens (8) de contrôle sont aptes à recevoir en entrée des signaux en provenance de capteurs mesurant une amplitude de la houle en amont du dispositif (1) ainsi que les mouvements de l'élément flotteur (2) et ceux de l'élément oscillant (3) et à générer en sortie des signaux ($u$) de commande pour commander les moyens (5) de freinage et les moyens (7) d'embrayage.

3. Dispositif selon l'une des revendications 1 ou 2, dans lequel les moyens (8) de contrôle sont programmés pour exécuter des étapes de :

   - (102) calculer des états ($X$) du dispositif en fonction de l'évolution de la houle à partir d'une modélisation mathématique du dispositif,
   - (104) calculer un paramètre ($H$) de critère d'optimisation de la commande en fonction des états ($X$) du dispositif,
   - (105) calculer des signaux ($u$) de commande des moyens de freinage et des moyens d'embrayage, de manière à maximiser le paramètre de critère.

4. Dispositif selon la revendication 3, dans lequel les moyens de (8) contrôle réitèrent les étapes (102) à (105) pour obtenir une convergence des signaux ($u$) de commande calculés.

5. Procédé pour convertir une énergie de houle en énergie utilisable notamment électrique, dans lequel un dispositif selon l'une des revendications 1 à 4 est soumis à une action de la houle et les moyens (8) de contrôle pilotent les moyens (6) de freinage et les moyens (7) d'embrayage en fonction d'une évolution de la houle.

**Claims**

1. A device (1) for converting swell energy into a useable energy in particular electrical energy, comprising a float element (2), an oscillating element (3) mounted so as to be mobile relatively to the float element, the oscillating element (3) being capable of being set into relative motion with respect to the float element (2) under action of the swell on the float element and means (4) for converting the movement of the oscillating element (3) into useable energy in particular electrical energy, the device (1) also comprising braking means (5) capable of selectively blocking or releasing the oscillating element (3) with respect to the float element, **characterized in that** it further comprises clutching means (7) capable of selectively coupling or uncoupling the conversion means (4) and the oscillating element (3), and control means (8) for driving the braking means (5) and the clutching means (7) depending on a fluctuation of swell.

2. The device according to claim 1, wherein the control means (8) are capable of receiving, as an input, signals from sensors measuring an amplitude of the swell upstream from the device (1) as well as movements of the float element (2) and those of the oscillating element (3), and of generating as an output, control signals ($u$) for controlling the braking means (5) and the clutching means (7).

3. The device according to any of claims 1 or 2, wherein the control means (8) are programmed so as to execute the steps of:

   - (102) calculating states ($X$) of the device according to the time-dependent fluctuation of the swell from mathematical modeling of the device,
   - (104) calculating a criterion parameter ($H$) for optimizing the control according to the states ($X$) of the device,
   - (105) calculating signals ($u$) for controlling the braking means and the clutching means, so as to maximize the criterion parameter.

4. The device according to claim 3, wherein the control means (8) repeat the steps (102) to (105) for obtaining convergence of the calculated control signals ($u$).

5. A method for converting swell energy into useable energy notably electrical energy, wherein a device according to any of claims 1 to 4 is subject to action of the swell and the control means (8) drive the braking means (6) and the clutching means (7) according to a fluctuation of the swell.

**Patentansprüche**

1. Vorrichtung (1) zur Umwandlung von Wellenenergie in nutzbare Energie, insbesondere elektrische Energie, umfassend ein schwimmendes (2), ein schwingendes Element (3), das relativ zu dem schwimmenden Element beweglich gelagert ist, wobei das schwingende Element (3) dazu geeignet ist, unter Einwirkung der Welle auf das schwimmende Element in eine Relativbewegung relativ zu dem schwimmenden Element (2) versetzt zu werden, und Mittel (4) zur Umwandlung der Bewegung des schwingenden Elements (3) in nutzbare Energie, insbesondere elektrische Energie, wobei die Vorrichtung (1) auch Bremsmittel (5) umfasst, die dazu geeignet sind, das schwingende Element (3) relativ zu dem schwimmenden Element selektiv zu blockieren oder zu lösen, **dadurch gekennzeichnet, dass** sie ferner Kopplungsmittel (7) umfasst, die dazu geeignet sind, die Umwandlungsmittel (4) und das schwingende Element (3) selektiv zu koppeln oder zu entkoppeln, und Steuermittel (8), um die Bremsmittel (5) und die Kopplungsmittel (7) in Abhängigkeit von einer Entwicklung der Welle zu steuern.

2. Vorrichtung nach Anspruch 1, wobei die Steuermittel (8) dazu geeignet sind, am Eingang Signale zu empfangen, die von Sensoren stammen, die eine Amplitude der Welle vor der Vorrichtung (1) sowie die Bewegungen des schwimmenden Elements (2) und die Bewegungendes schwingenden Elements (3) messen, und am Ausgang Bestätigungssignale (u) für die Betätigung der Bremsmittel (5) und der Kopplungsmittel (7) zu erzeugen.

3. Vorrichtung nach einem der Ansprüche 1 oder 2, wobei die Steuermittel (8) programmiert sind, um folgende Schritte auszuführen:

   - (102) Berechnen von Zuständen (X) der Vorrichtung in Abhängigkeit von der Entwicklung der Welle ausgehend von einer mathematischen Modellierung der Vorrichtung,
   - (104) Berechnen eines Parameters (H) als Kriterium für die Optimierung der Betätigung in Abhängigkeit der Zustände (X) der Vorrichtung,

- (105) Berechnen von Signalen (u) für die Betätigung der Bremsmittel und der Kopplungsmittel, derart, dass der Kriterienparameter maximiert wird.

4. Vorrichtung nach Anspruch 3, wobei die Steuermittel (8) die Schritte (102) bis (105) wiederholen, um eine Konvergenz der berechneten Betätigungssignale (u) zu erhalten.

5. Verfahren zur Umwandlung von Wellenenergie in nutzbare Energie, insbesondere elektrische Energie, wobei eine Vorrichtung nach einem der Ansprüche 1 bis 4 einer Einwirkung der Welle ausgesetzt wird, und wobei die Steuermittel (8) die Bremsmittel (6) und die Kopplungsmittel (7) in Abhängigkeit von einer Entwicklung der Welle steuern.

## FIG. 1

**FIG. 2**

**FIG. 3**

**FIG. 4**

## FIG. 5

101 — Mesure d'une variation de la houle en amont du dispositif

100

Initialisation

$U = \begin{cases} U_{\text{latching}} = 0 \\ U_{\text{débrayage}} = 1 \end{cases}$

102 — Calcul des états X du système

103 — Calcul de $\lambda$

Itération

$U = \begin{cases} U_{\text{latching}} \\ U_{\text{débrayage}} \end{cases}$

104 — Calcul du Hamiltonien H

105 — Calcul d'une commande

$U = \begin{cases} U_{\text{latching}} \\ U_{\text{débrayage}} \end{cases}$

106 — Application des signaux de commande aux moyens de freinage et moyens d'embrayage

## FIG. 6

## FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2876751 A1
- FR 2384961 A
- WO 2007137426 A1

**Littérature non-brevet citée dans la description**

- **A. BABARIT ; A. H. CLÉMENT.** Optimal latching control of a wave energy device in regular and irregular waves. *Applied Ocean Research,* 2006, vol. 28, 77-91
- Optimal strategies for phase control of wave energy devices. **R. E. HOSKIN ; N. K. NICHOLS.** Utilization of Ocean waves: Wave to Energy Conversion. American society of civil engineers, 1986, 184-199